# EUROPÄISCHE PATENTSCHRIFT

(11) **EP 0 979 747 B1**
(45) Veröffentlichungstag und Bekanntmachung des Hinweises auf die Patenterteilung: **10.03.2004**
(21) Anmeldenummer: 99114570.7
(22) Anmeldetag: 24.07.1999
(51) Int. Cl.: B60K 15/077, B60K 15/04

(54) **Befülleinrichtung**
Replenishment device
Dispositif de remplissage

(30) Priorität: 10.08.1998 DE 19836057
(43) Veröffentlichungstag der Anmeldung: 16.02.2000
(73) Patentinhaber: Siemens Aktiengesellschaft, 80333 München (DE)
(72) Erfinder: Meyer, Knut, Dr., 45239 Essen (DE); Löw, Peter Andreas, 64711 Erbach (DE); Zapp, Thomas, Dr., 44265 Dortmund (DE); Kochsmeier, Christian, 44137 Dortmund (DE)

(56) Entgegenhaltungen:
- EP-A- 0 832 777
- DE-A- 2 452 248
- US-A- 2 719 583

## Beschreibung

Die Erfindung betrifft einen Kraftstoffbehälter eines Kraftfahrzeuges, gemaß dem Oberbegriff des Anspruchs 1, wie er aus der EP-A-832 777 bekannt geworden ist.

Kraftstoffbehälter werden über Befüllstutzen mit Kraftstoff befüllt. Hierbei gelangt bei ausreichend großer Menge des Kraftstoffs ein Teil davon in den gegebenenfalls vorhanderen Schwalltopf. Um eine ständige Befüllung des Schwalltopfes sicherzustellen, ist zudem häufig im Bodenbereich des Schwalltopfes ein Ventil angeordnet. Dieses Ventil sorgt dafür, daß die Füllstandshöhe des Kraftstoffs im Schwalltopf mindestens der Höhe des den Schwalltopf umgebenden Bereichs des Kraftstoffbehälters entspricht. Die Fördereinheit fördert Kraftstoff aus dem Schwalltopf zu einer Brennkraftmaschine des Kraftstoffbehälters. Bei ausreichend hohem Füllstand im Kraftstoffbehälter gelangt im Betrieb der Brennkraftmaschine über eine von der Fördereinheit angetriebene Saugstrahlpumpe Kraftstoff in den Schwalltopf. Hierdurch wird bei fortschreitendem Kraftstoffvergegebenenfalls verhandenen brauch zunächst der den Schwalltopf umgebende Kraftstoffbehälter und zuletzt der Schwalltopf selbst entleert.

Nachteilig bei der bekannten Befülleinrichtung ist, daß man nach vollständiger Entleerung des Kraftstoffbehälters oder bei dessen Erstbefüllung eine sehr große Menge Kraftstoff in den Kraftstoffbehälter einfüllen muß, damit eine für den Betrieb der Fördereinheit ausreichende Menge an Kraftstoff in den Schwalltopf fließt. Bei einer Notbefüllung mit einem nur wenige Liter fassenden Reservekanister besteht zudem das Problem, daß bei einer Schrägstellung des Kraftfahrzeuges der gesamte Kraftstoff in einen Seitenbereich des Kraftstoffbehälters fließt und deshalb überhaupt kein Kraftstoff in den Schwalltopf gelangt. Anschließend läßt sich das Kraftfahrzeug nicht starten.

Man könnte daran denken, durch den Befüllstutzen in den Kraftstoffbehälter einströmenden Kraftstoff unmittelbar in den Schwalltopf einzuleiten, so daß dieser zuerst befüllt wird und sich anschließend der überlaufende Kraftstoff in dem Kraftstoffbehälter verteilt. Bei einer normalen Befüllung mit einer Zapfpistole werden dem Kraftstoffbehälter jedoch bis zu 60 Liter Kraftstoff pro Minute zugeführt, so daß diese Gestaltung zu einem Aufschäumen des Kraftstoffs führt. Weiterhin hat sich gezeigt, daß insbesondere bei großen Volumenströmen ein Großteil des Kraftstoffs aus dem Schwalltopf wieder herausspritzt.

Der Erfindung liegt das Problem zugrunde, einen Krafstoffbehältesder eingangs genannten Art so zu gestalten, daß sich die Befüllung eines Schwalltopfes in Abhängigkeit von dem Volumenstrom und der Menge an Kraftstoff sowie der geometrischen Gestaltung des Kraftstoffbehälters möglichst einfach einstellen läßt.

Dieses Problem wird erfindungsgemäß durch die Merkmale der Anspruchs 1 gelöst.

Hierdurch läßt sich das Verteilelement entsprechend des durch den Befüllstutzen eintretenden Volumenstroms an Kraftstoff gestalten. Von einem hohen Volumenstrom, der beispielsweise in dem Befüllstutzen einen vorhersehbaren Drall erfährt, läßt sich einfach ein verhältnismäßig kleiner Teilstrom abzweigen und dem Schwalltopf zuführen. Weiterhin kann eine geringe Menge mit einem großen Volumenstrom zugeführten Kraftstoff im Verteilelement aufgestaut und hauptsächlich dem Schwalltopf zugeführt werden. Da das Verteilelement an dem Befüllstutzen anschließbar ist, sind zur Nachrüstung von vorhandenen Kraftstoffbehältern mit Befüllstutzen keine Änderungen erforderlich. Durch die erfindungsgemäße zuverlässige Aufteilung der Teilströme kann auf ein im Bodenbereich des Schwalltopfes angeordnetes Ventil verzichtet werden, da der Schwalltopf bei Erstbefüllung bevorzugt befüllt wird und während des Betriebes von einer Saugstrahlpumpe befüllt werden kann. Der Verzicht auf das Ventil stellt einen gewichtigen Vorteil dar, weil dadurch der Schwalltopf, abgesehen von einer Überlauföffnung an der Oberseite, vollständig geschlossen gestaltet werden kann. Deshalb kann das Kraftfahrzeug bei fast leerem Kraftstoffbehälter in einer Schrägstellung für längere Zeit abgestellt werden, ohne daß der Schwalltopf durch Undichtigkeiten im Ventil leerlaufen kann.

Das Verteilelement könnte beispielsweise als Bündel aus mehreren Rohren gestaltet sein. Das Verteilelement läßt sich jedoch gemäß einer vorteilhaften Weiterbildung der Erfindung besonders kostengünstig fertigen und in dem Kraftstoffbehälter montieren, wenn es an seinem dem Befüllstutzen zugewandten Ende ein gemeinsames Teilstück für mehrere Abzweige aufweist. Die erfindungsgemäße Befülleinrichtung ist hierdurch zudem konstruktiv besonders einfach aufgebaut.

Das Verteilelement gestaltet sich gemäß einer anderen vorteilhaften Weiterbildung der Erfindung konstruktiv besonders einfach, wenn in dem gemeinsamen Teilstück eine Trennwand zur Führung des Kraftstoffs zu den Abzweigen angeordnet ist.

Bei einem gerade in den Kraftstoffbehälter mündenden Befüllstutzen und bei einem geringen Volumenstrom an Kraftstoff gelangt gemäß einer anderen vorteilhaften Weiterbildung der Erfindung der gesamte Kraftstoff zu einem vorgesehenen Abzweig, wenn die Trennwand das gemeinsame Teilstück in übereinanderliegende Kanäle unterteilt. Erst bei einem großen Volumenstrom an Kraftstoff wird ein Teilstrom in den oberen Kanal gelenkt.

Gasförmiger Kraftstoff und Luft können sehr einfach mit besonders geringem baulichen Aufwand aus dem Verteilelement abgeführt werden, wenn die Trennwand quer zu ihrer längsten Erstreckung gewölbt ist. Durch die Wölbung entstehen seitlich oder in der Mitte der Kanäle schmale Bereiche, in denen sich die Gase sammeln. Anschließend können die Gase in Richtung des höchsten Punktes des Verteil elementes abgeführt werden.

Das Verteilelement läßt sich gemäß einer anderen vorteilhaften Weiterbildung der Erfindung besonders kostengünstig fertigen, wenn die Trennwand als Einsatz für das gemeinsame Teilstück ausgebildet ist.

Mehrere im Kraftstoffbehälter angeordnete Schwalltöpfe lassen sich gemäß einer anderen vorteilhaften Weiterbildung der Erfindung mit besonders geringem baulichen Aufwand mit Kraftstoff versorgen, wenn das Verteilelement mehrere miteinander verbundene Trennwände hat.

Ein Aufschäumen des Kraftstoffs im Schwalltopf läßt sich gemäß einer anderen vorteilhaften Weiterbildung der Erfindung einfach vermeiden, wenn der Abzweig für den Schwalltopf ein nach unten hin abstehendes Schwallblech hat.

Zur weiteren Verringerung des Aufschäumens des Kraftstoffs trägt es gemäß einer anderen vorteilhaften Weiterbildung der Erfindung bei, wenn einer der Abzweige zur Führung bis in den Bodenbereich des Schwalltopfes ausgebildet ist.

Das Verteilelement läßt sich gemäß einer anderen vorteilhaften Weiterbildung der Erfindung einfach montieren, wenn das Verteilelement zur Anordnung an einem oberen Schalenteil des Kraftstoffbehälters vorgesehen ist. Hierdurch kann das Verteilelement vor dem Zusammenfügen der Schalenteile des Kraftstoffbehälters an der oberen Halbschale befestigt werden. Es ist aber auch möglich das Verteilelement in einem nach dem Blasverfahren hergestellten Kraftstoffbehälter zu montieren, indem das Verteilelement durch eine Öffnung in den Kraftstoffbehälter eingebracht und dort befestigt wird.

Das Teilstück läßt sich gemäß einer anderen vorteilhaften Weiterbildung der Erfindung kostengünstig in einer axial entformbaren Spritzgußform fertigen, wenn das gemeinsame Teilstück entlang seiner längsten Erstreckung geteilt ist.

Das Verteilelement läßt sich gemäß einer anderen vorteilhaften Weiterbildung der Erfindung besonders einfach montieren, wenn die Teile des Verteilelementes miteinander verclipst sind. Da das Verteilelement vollständig innerhalb des Kraftstoffbehälters angeordnet ist, sind keine besonderen Dichtheitsanforderungen bezüglich der Trennwand notwendig.

In der Regel haben die Befülleinrichtungen ein Rückschlagventil zur Verhinderung eines Herausschwappens des Kraftstoffs aus dem Einfüllrohr. In jedem der Abzweige könnte jeweils ein Rückschlagventil angeordnet sein. Die erfindungsgemäße Befülleinrichtung gestaltet sich jedoch gemäß einer anderen vorteilhaften Weiterbildung der Erfindung besonders kostengünstig, wenn zwischen dem Verteilelement und dem Befüllstutzen ein Rückschlagventil angeordnet ist. Das Rückschlagventil kann beispielsweise eine mit einer Feder vorgespannte Kugel oder eine Klappe aufweisen.

Zur weiteren Verringerung der Fertigungskosten der erfindungsgemäßen Befülleinrichtung trägt es bei, wenn das Rückschlagventil mit dem Verteilelement als vormontierbare bauliche Einheit gestaltet ist.

Die Erfindung läßt zahlreiche Ausführungsformen zu. Zur weiteren Verdeutlichung ihres Grundprinzips sind drei davon in der Zeichnung dargestellt und werden nachfolgend beschrieben. Diese zeigt in
- Fig.1: eine schematische Darstellung eines erfindungsgemäßen Kraftstoffbehälters mit einer Befülleinrichtung,
- Fig.2: ein Verteilelement einer zweiten Ausführungsform der Befülleinrichtung in einer Ansicht von oben,
- Fig.3: einen Längsschnitt durch das Verteilelement aus Figur 2 entlang der Linie III - III,
- Fig.4: einen Querschnitt durch ein Verteilelement einer weiteren Ausführungsform der Befülleinrichtung.

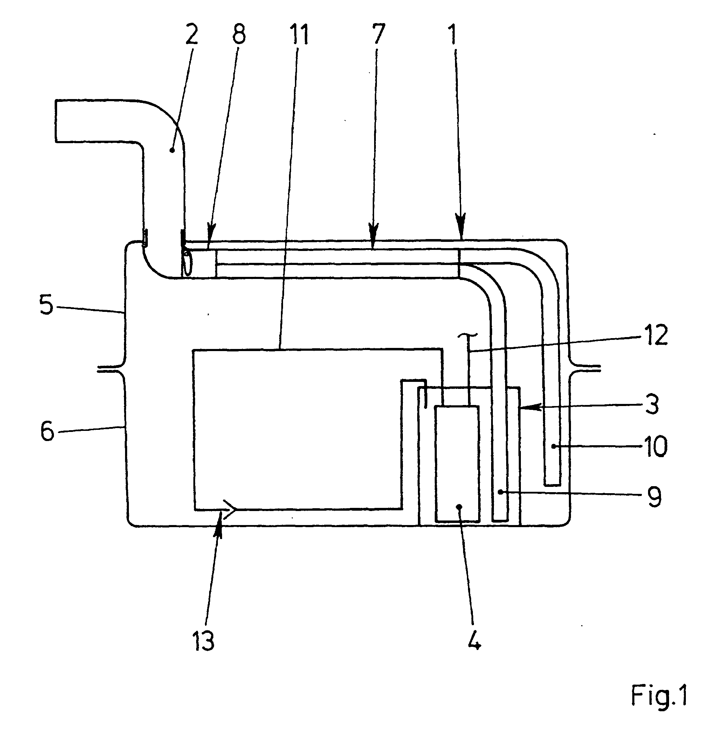

Die Figur 1 zeigt einen Kraftstoffbehälter 1 eines Kraftfahrzeuges mit einem Befüllstutzen 2 und einem Schwalltopf 3. In dem Schwalltopf 3 ist eine Fördereinheit 4 angeordnet. Der Kraftstoffbehälter 1 setzt sich aus zwei Schalenteilen 5, 6 zusammen. An der Innenseite des oberen Schalenteils 5 ist ein Verteilelement 7 befestigt. Das Verteilelement 7 ist über ein Rückschlagventil 8 an dem Befüllstutzen 2 angeschlossen und hat einen zu dem Schwalltopf 3 führenden Abzweig 9 und einen bis in den Bodenbereich neben dem Schwalltopf 3 geführten Abzweig 10. Die Anordnung der Abzweige 9, 10 und deren annähernd gleiche Länge stellen sicher, daß bei einer Schrägstellung des Kraftfahrzeuges eine bevorzugte Durchströmung einer der Abzweige 9, 10 weitgehend vermieden wird. Die Fördereinheit 4 fördert Kraftstoff aus dem Bodenbereich des Schwalltopfes 3 zu zwei Auslässen 11, 12. Einer der Auslässe 11 ist mit einer im Bodenbereich des Kraftstoffbehälters 1 angeordneten Saugstrahlpumpe 13 verbunden, während der zweite Auslaß 12 zu einer nicht dargestellten Brennkraftmaschine des Kraftfahrzeuges führt.

In den Kraftstoffbehälter 1 eingefüllter Kraftstoff wird unmittelbar zu Beginn des Verteilelementes 7 in die Abzweige 9, 10 aufgeteilt. Der in den Schwalltopf 3 mündende Abzweig 9 befindet sich unterhalb des zu dem Bodenbereich des Kraftstoffbehälters 1 geführten Abzweigs 10. Hierdurch wird bei einem geringen Volumenstrom durch den Befüllstutzen 2 fließenden Kraftstoffs der gesamte Kraftstoff dem Schwalltopf 3 zugeführt. Ein großer Volumenstrom gelangt in beide Abzweige 9, 10, so daß eine starke Schaumbildung im Schwalltopf 3 vermieden wird. Die Aufteilung des Volumenstroms läßt sich einfach durch das Verhältnis der Querschnitte der Abzweige 9, 10 einstellen.

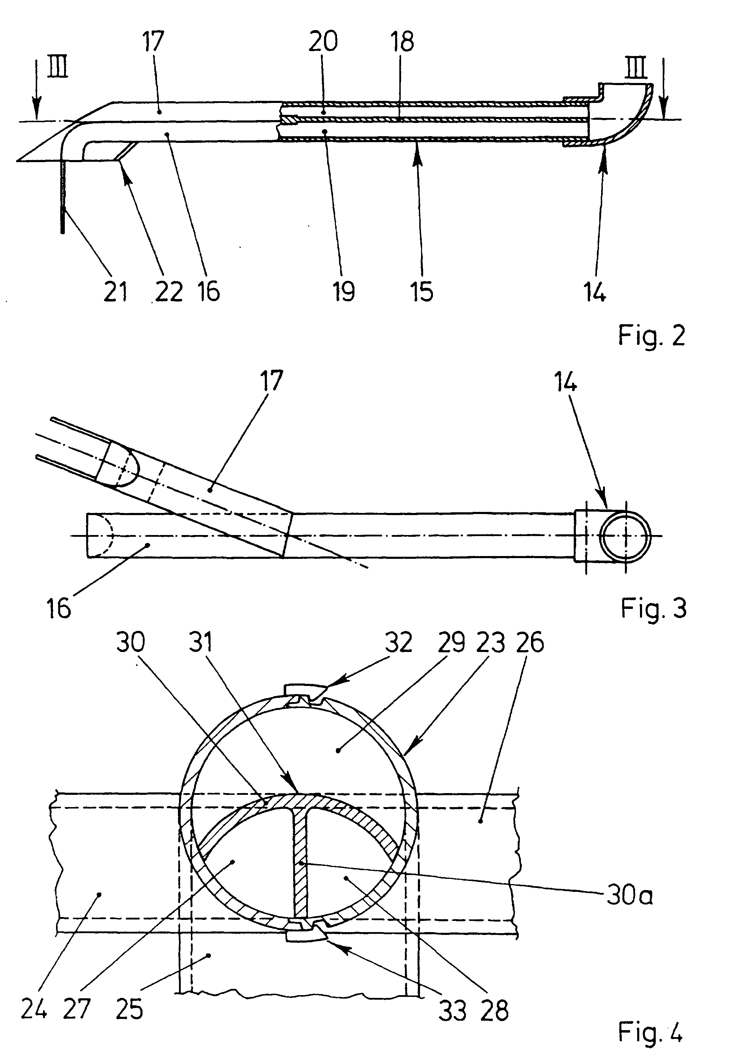

Die Figur 2 zeigt ein Verteilelement 14 mit einem gemeinsamen Teilstück 15 für zwei Abzweige 16, 17. Zur Verdeutlichung ist das Teilstück 15 geschnitten dargestellt. In dem Teilstück 15 ist eine horizontale Trennwand 18 zu dessen Unterteilung in zwei übereinanderliegende Kanäle 19, 20 angeordnet. Einer der Abzweige 16 hat ein nach unten hin abstehendes Schwallblech 21. Bei der Anordnung des Verteilelementes 14 in dem in Figur 1 dargestellten Kraftstoffbehälter 1 ist das Schwallblech 21 von oben in den Schwalltopf 3 einzuführen. Der andere Abzweig 17 hat eine Rinne 22 zur Führung des Kraftstoffs in den in Figur 1 dargestellten Kraftstoffbehälter 1.

Die Figur 3 zeigt in einer Ansicht von oben, daß die Abzweige 16, 17 erst kurz vor dem Ende des Verteilelementes 14 voneinander getrennt sind. Hierdurch haben die Abzweige 16, 17 ungefähr dieselbe Länge.

Die Figur 4 zeigt ein Verteilelement 23 mit drei zu jeweils einem Abzweig 24 - 26 führenden Kanälen 27 - 29 in einem Querschnitt. Die Kanäle 27 - 29 sind durch als Einsatz für das Verteilelement 23 gestaltete Trennwände 30, 30a voneinander getrennt. Das Verteilelement 23 hat in diesem Bereich ein gemeinsames Teilstück 31 für die Kanäle 27 - 29. Die horizontale Trennwand 30 ist längs zu ihrer längsten Erstreckung gewölbt. Weiterhin zeigt Figur 4, daß das Verteilelement 23 entlang seiner längsten Erstreckung geteilt ist und an seiner Trennstelle mit Clipsverbindungen 32, 33 zusammengehalten wird.

## Patentansprüche

1. Kraftstoffbehälter für ein Kraftfahrzeug, mit einer einen Befüllstutzen aufweisenden Befülleinrichtung des Kraftstoffbehälters und mit einem Verteilelement zur Verteilung des dem Kraftstoffbehälter zugeführten Kraftstoffs, wobei das Verteilelement (7, 14, 23) an dem Befüllstutzen (2) angeschlossen ist, zumindest zwei Abzweige (9, 10, 16, 17, 24 - 26) aufweist und den einströmenden Kraftstoff aufteilt, **dadurch gekennzeichnet, dass** in dem Kraftstoffbehälter ein Schwalltopf für eine Fördereinheit zur Förderung des Kraftstoffs aus dem Schwalltopf angeordnet ist, und dass einer der Abzweige (9, 10, 16, 17, 24 - 26) in den Kraftstoffbehälter (1) und der andere der Abzweige (9, 10, 16, 17, 24 - 26) in den Schwalltopf (3) mündet.

2. Kraftstoffbehälter nach Anspruch 1, **dadurch gekennzeichnet, daß** das Verteilelement (14, 23) an seinem dem Befüllstutzen (2) zugewandten Ende ein gemeinsames Teilstück (15, 31) für mehrere Abzweige (16, 17, 24 - 26) aufweist.

3. Kraftstoffbehälter nach Anspruch 1 oder 2, **dadurch gekennzeichnet, daß** in dem gemeinsamen Teilstück (15, 31) eine Trennwand (18, 30, 30a) zur Führung des Kraftstoffs zu den Abzweigen (16, 17, 24 - 26) angeordnet ist.

4. Kraftstoffbehälter nach zumindest einem der vorhergehenden Ansprüche, **dadurch gekennzeichnet, daß** die Trennwand (18, 30) das gemeinsame Teilstück (15, 31) in übereinanderliegende Kanäle (19, 20, 27 - 29) unterteilt.

5. Kraftstoffbehälter nach zumindest einem der vorhergehenden Ansprüche, **dadurch gekennzeichnet, daß** die Trennwand (30) quer zu ihrer längsten Erstreckung gewölbt ist.

6. Kraftstoffbehälter nach zumindest einem der vorhergehenden Ansprüche, **dadurch gekennzeichnet, daß** die Trennwand (30, 30a) als Einsatz für das gemeinsame Teilstück (31) ausgebildet ist.

7. Kraftstoffbehälter nach zumindest einem der vorhergehenden Ansprüche, **dadurch gekennzeichnet, daß** das Verteilelement (23) mehrere miteinander verbundene Trennwände (30, 30a) hat.

8. Kraftstoffbehälter nach zumindest einem der vorhergehenden Ansprüche, **dadurch gekennzeichnet, daß** der Abzweig (16) für den Schwalltopf (3) ein nach unten hin abstehendes Schwallblech (21) hat.

9. Kraftstoffbehälter nach zumindest einem der vorhergehenden Ansprüche, **dadurch gekennzeichnet, daß** einer der Abzweige (9) zur Führung bis in den Bodenbereich des Schwalltopfes (3) ausgebildet ist.

10. Kraftstoffbehälter nach zumindest einem der vorhergehenden Ansprüche, **dadurch gekennzeichnet, daß** das Verteilelement (7) zur Anordnung an einem oberen Schalenteil (5) des Kraftstoffbehälters (1) vorgesehen ist.

11. Kraftstoffbehälter nach zumindest einem der vorhergehenden Ansprüche, **dadurch gekennzeichnet, daß** das gemeinsame Teilstück (31) entlang seiner längsten Erstreckung geteilt ist.

12. Kraftstoffbehälter nach zumindest einem der vorhergehenden Ansprüche, **dadurch gekennzeichnet, daß** die Teile des Verteilelementes (23) miteinander verclipst sind.

13. Kraftstoffbehälter nach zumindest einem der vorhergehenden Ansprüche, **dadurch gekennzeichnet, daß** zwischen dem Verteilelement (7) und dem Befüllstutzen (2) ein Rückschlagventil (8) angeordnet ist.

14. Kraftstoffbehälter nach zumindest einem der vorhergehenden Ansprüche, **dadurch gekennzeichnet, daß** das Rückschlagventil (8) mit dem Verteilelement (7) als vormontierbare bauliche Einheit gestaltet ist.

## Claims

1. Fuel tank for a motor vehicle, having a filling device of the fuel tank that has a filling nozzle, and having a distributing element for distributing the fuel supplied to the fuel tank, the distributing element (7, 14, 23) being connected to the filling nozzle (2), having at least two branches (9, 10, 16, 17, 24-26) and dividing up the inflowing fuel, **characterized in that** an anti-surge tower for a delivery unit for delivering the fuel from the anti-surge tower is arranged in the fuel tank, and **in that** one of the branches (9, 10, 16, 17, 24-26) leads into the fuel tank (1) and the other of the branches (9, 10, 16, 17, 24-26) leads into the anti-surge tower (3).

2. Fuel tank according to Claim 1, **characterized in that** at its end which faces the filling nozzle (2), the distributing element (14, 23) has a common section (15, 31) for a plurality of branches (16, 17, 24 - 26).

3. Fuel tank according to Claim 1 or 2, **characterized in that** a partition (18, 30, 30a) for guiding the fuel to the branches (16, 17, 24 - 26) is arranged in the common section (15, 31).

4. Fuel tank according to at least one of the preceding claims, **characterized in that** the partition (18, 30) divides the common section (15, 31) into channels (19, 20, 27 - 29) lying one above another.

5. Fuel tank according to at least one of the preceding claims, **characterized in that** the partition (30) is curved transversely to its longest extent.

6. Fuel tank according to at least one of the preceding claims, **characterized in that** the partition (30, 30a) is designed as an insert for the common section (31).

7. Fuel tank according to at least one of the preceding claims, **characterized in that** the distributing element (23) has a plurality of partitions (30, 30a) which are connected to one another.

8. Fuel tank according to at least one of the preceding claims, **characterized in that** the branch (16) for the anti-surge tower (3) has a downwardly protruding anti-surge baffle (21).

9. Fuel tank according to at least one of the preceding claims, **characterized in that** one of the branches (9) is designed for guiding into the bottom region of the anti-surge tower (3).

10. Fuel tank according to at least one of the preceding claims, **characterized in that** the distributing element (7) is provided for arranging on an upper shell part (5) of the fuel tank (1).

11. Fuel tank according to at least one of the preceding claims, **characterized in that** the common section (31) is divided along its longest extent.

12. Fuel tank according to at least one of the preceding claims, **characterized in that** the parts of the distributing element (23) are clipped to one another.

13. Fuel tank according to at least one of the preceding claims, **characterized in that** a non-return valve (8) is arranged between the distributing element (7) and the filling nozzle (2).

14. Fuel tank according to at least one of the preceding claims, **characterized in that** the non-return valve (8) together with the distributing element (7) is designed as a constructional unit which can be preassembled.

## Revendications

1. Réservoir à carburant pour véhicule automobile, comprenant un dispositif de remplissage équipé d'une tubulure de remplissage du réservoir à carburant et comprenant un élément de distribution pour distribuer le carburant amené au réservoir à carburant, ledit élément de distribution (7, 14, 23) étant raccordé à la tubulure de remplissage (2), pourvu d'au moins deux dérivations (9, 10, 16, 17, 24 - 26) et assurant la répartition du carburant entrant, **caractérisé en ce que** dans le réservoir à carburant est placé un pot de tranquilisation pour une unité d'acheminement destinée à acheminer le carburant en provenance du pot de tranquilisation et **en ce que** l'une des dérivations (9, 10, 16, 17, 24 - 26) débouche dans le réservoir à carburant (1) et l'autre des dérivations (9, 10, 16, 17,24 - 26) dans le pot de tranquilisation (3).

2. Réservoir à carburant selon la revendication 1, **caractérisé en ce que** l'élément de distribution (14, 23) comporte à son extrémité tournée vers la tubulure de remplissage (2) un tronçon commun (15, 31) pour plusieurs dérivations (16, 17, 24 - 26).

3. Réservoir à carburant selon la revendication 1 ou 2, **caractérisé en ce qu'**une paroi de séparation (18, 30, 30a) est placée dans le tronçon commun (15, 31) pour acheminer le carburant vers les dérivations (16, 17, 24 - 26).

4. Réservoir à carburant selon au moins l'une des revendications précédentes, **caractérisé en ce que** la paroi de séparation (18, 30) subdivise le tronçon commun (15, 31) en canaux superposés (19, 20, 27 - 29).

5. Réservoir à carburant selon au moins l'une des revendications précédentes, **caractérisé en ce que** la paroi de séparation (30) est courbée perpendiculairement à sa plus grande extension.

6. Réservoir à carburant selon au moins l'une des revendications précédentes, **caractérisé en ce que** la paroi de séparation (30, 30a) est configurée comme insert pour le tronçon commun (31).

7. Réservoir à carburant selon au moins l'une des revendications précédentes, **caractérisé en ce que** l'élément de distribution (23) a plusieurs parois de séparation (30, 30a) reliées entre elles.

8. Réservoir à carburant selon au moins l'une des revendications précédentes, **caractérisé en ce que** la dérivation (16) pour le pot de tranquilisation (3) a une chicane (21) saillant vers le bas.

9. Réservoir à carburant selon au moins l'une des revendications précédentes, **caractérisé en ce que** l'une des dérivations (9) est configurée pour aller jusqu'au niveau du fond du pot de tranquilisation (3).

10. Réservoir à carburant selon au moins l'une des revendications précédentes, **caractérisé en ce que** l'élément de distribution (7) est prévu pour être monté sur une partie de coque supérieure (5) du réservoir à carburant (1).

11. Réservoir à carburant selon au moins l'une des revendications précédentes, **caractérisé en ce que** le tronçon commun (31) est divisé selon sa plus grande extension.

12. Réservoir à carburant selon au moins l'une des revendications précédentes, **caractérisé en ce que** les pièces de l'élément de distribution (23) sont clipsées les unes dans les autres.

13. Réservoir à carburant selon au moins l'une des revendications précédentes, **caractérisé en ce qu'**un clapet anti-retour (8) est monté entre l'élément de distribution (7) et la tubulure de remplissage (2).

14. Réservoir à carburant selon au moins l'une des revendications précédentes, **caractérisé en ce que** le clapet anti-retour (8) se présente avec l'élément de distribution (7) sous forme d'ensemble de construction prémontable.
